# EUROPÄISCHE PATENTSCHRIFT

(11) **EP 1 283 935 B1**
(45) Veröffentlichungstag und Bekanntmachung des Hinweises auf die Patenterteilung: **21.09.2005**
(21) Anmeldenummer: 01933577.7
(22) Anmeldetag: 22.03.2001
(51) Int. Cl.: E21B 10/44, E21B 10/58, B23B 51/00, B28D 1/14

(54) **GESTEINSBOHRER**
ROCK DRILL
FORET A PIERRE

(30) Priorität: 19.05.2000 DE 10024433
(43) Veröffentlichungstag der Anmeldung: 19.02.2003
(73) Patentinhaber: ROBERT BOSCH GMBH, 70442 Stuttgart (DE)
(72) Erfinder: HAUSSMANN, August, 88213 Ravensburg (DE); SCHWARZ, Gerhard, 88273 Blitzenreute (DE)
(74) Vertreter: Eisele, Otten, Roth & Dobler
(86) Internationale Anmeldenummer: PCT/DE2001/001111
(87) Internationale Veröffentlichungsnummer: WO 2001/088321

(56) Entgegenhaltungen:
- EP-A- 1 045 112
- DE-A- 2 211 532
- DE-A- 4 306 981
- DE-C- 19 516 270
- US-A- 2 673 714

## Beschreibung

Die Erfindung betrifft einen Gesteinsbohrer nach dem Oberbegriff des Anspruchs 1.

### Stand der Technik:

Gesteinsbohrer mit Hartmetall-Schneidplatten werden zur Herstellung von Bohrungen in Beton, Mauerwerk, Gestein oder dergleichen verwendet. Dabei ist der Bohrkopf an seiner Stirnseite mit wenigstens einer, sich allgemein über den gesamten Bohrkopfdurchmesser erstreckenden Hartmetall-Schneidplatte versehen, die durch den drehschlagenden beziehungsweise drehhämmernden Bohrantrieb einer Art Meißelwirkung auf das zu zerkleinernde Steingut ausübt. Der Bohrlochdurchmesser wird durch den Außendurchmesser der Hartmetall-Schneidplatte bestimmt.

Um die Flächenpressung auf die Hartmetall-Schneidplatte zu verkleinern und damit die Standzeiten des Bohrkopfes zu vergrößern, sind Kreuzschneidelemente bekannt geworden, bei welchen quer zu einer Hauptschneidplatte sogenannte Nebenschneidplatten angeordnet sind (DE 29 12 394 A1).

Anstelle von sich gegebenenfalls über den gesamten Durchmesser erstreckenden Nebenschneidplatten können auch Nebenschneidelemente vorgesehen sein, die sich nur über einen Teil des Radius des Bohrkopfes erstrecken (DE 81 04 116 U1).

Aus der EP 0 452 255 B1 ist weiterhin ein Gesteinsbohrer bekannt geworden, bei welchem die Nebenschneidelemente als Schneidstifte ausgebildet sind, die im radial außenliegenden Bereich der Stirnfläche des Bohrkopfes angeordnet sind.

Die Anordnung von wenigstens einer oder mehreren zusätzlichen Nebenschneidplatten hat zwar den Vorteil, dass die Hauptschneidplatte in gewissem Maße entlastet ist, da ein Teil der Abbrucharbeit von der oder den Nebenschneidplatten übernommen wird. Nachteilig an der Anordnung von einer oder mehreren Nebenschneidplatten ist die Tatsache, dass hier zusätzlicher Befestigungsraum zur Einbettung der Nebenschneidplatten im Bohrkopf geschaffen werden muss, so dass die Stirnfläche des Bohrkopfes insgesamt voluminöser ausgebildet sein muss. Dieses wiederum hat den Nachteil, dass sich die Stirnfläche des Bohrkopfes vergrößert und einen größeren Widerstand bildet. Dies gilt insbesondere auch für die Möglichkeit des Bohrers zum Abtransport des abzutragenden Bohrkleins oder Bohrmehls, welches sich in Drehrichtung vor den Schneiden der Hauptschneidplatte und der Nebenschneidplatten ansammelt. Die Menge dieses Bohrkleins erhöht den Widerstand und vermindert damit den Bohrfortschritt des Bohrwerkzeugs. Die vorstehende Problematik trifft prinzipiell auch auf Bohrwerkzeuge mit nur einer Hauptschneidplatte zu, bei welchen der Bohrkopf weniger schlank ausgebildet ist und dadurch ein Materialtransport im Bereich des Bohrkopfes Probleme bereitet.

Aus dem Dokument US 2,673,714 A ist ein Bohrwerkzeug nach der Gattung des Patentanspruchs 1 bekannt geworden. Bei diesem Bohrwerkzeug wird ein zusätzlicher Spanraum dadurch geschaffen, dass vor und hinter einer Schneidplatte sehnenförmig seitliche Bereiche des Bohrerkopfes abgeschnitten sind, die die Hartmetall-Platte in diesem Bereich freilegen. Nachteilig hieran ist die mangelhafte Einbettung der Hartmetall-Platte in diesem Bereich, da sich die Aussparungen insbesondere auf beide Seiten der Hartmetall-Platte erstrecken.

Der Erfindung liegt die Aufgabe zugrunde, bei einem Werkzeug nach der Gattung des Anspruchs 1 einen verbesserten Bohrfortschritt zu schaffen.

Diese Aufgabe wird durch die Merkmale des Anspruchs 1 und insbesondere durch den kennzeichnenden Teil des Anspruchs 1 gelöst.

In den Unteransprüchen sind vorteilhafte und zweckmäßige Weiterbildungen angegeben.

### Vorteile der Erfindung:

Der Erfindung liegt der Kerngedanke zugrunde, eine Verbesserung der Fördereigenschaften eines Gesteinsbohrers im Bereich des oder der Hartmetall-Schneidelemente zu schaffen. Dies gilt insbesondere auch für Bohrwerkzeuge mit größerem Nenndurchmesser, bei welchen radial außenliegende Nebenschneidelemente und insbesondere Nebenschneidplatten vorgesehen sind, die einen erheblichen Anteil an der aufzubringenden Abtragsarbeit am Gestein leisten können, oder für Werkzeuge mit höherem Eindringwiderstand aufgrund einer größeren Bohrerkopf-Widerstandsfläche. Durch eine Vergrößerung des vor einer Hartmetall-Schneidplatte liegenden Spanraumes, insbesondere im radial außen liegenden Bereich wird das Bohrmehl leichter abtransportiert. Um den Nachteil der zusätzlichen Schneidelemente mit dem damit verbundenen verschlechterten Abtransport des Bohrmehls im Bohrerkopfbereich zu kompensieren, sieht die Erfindung ebenso einen zusätzlichen Spanraum zumindest auch vor der jeweiligen Nebenschneidplatte oder einem entsprechenden Hartmetall-Schneidelement vor. Dieser zusätzliche Spanraum wird durch eine Abstufung in der Stirnfläche des Bohrerkopfes vorgenommen, wobei der abgestufte Flächenbereich sich möglichst unmittelbar vor einer entsprechenden Scheidplatte befindet. Die Vergrößerung des hiermit geschaffenen Spanraumes zum Abtransport von Bohrmehl wirkt sich verschleißmindernd auf den Bohrkopf aus, da das Bohrmehl einen geringeren Widerstand bildet und leichter abtransportiert werden kann.

In vorteilhafter Weise werden insbesondere verschieden ausgebildete Nebenscheidplatten verwendet, die stirnseitig entweder eben, das heißt in einem etwa rechten Winkel zur Bohrerlängsachse oder schräg geneigt ausgebildet sind. Im letzteren Falle kann die auf einer Kegelmantelfläche liegende Schneide der Nebenschneidplatte auf der gleichen Kegelmantelfläche wie eine dachförmig geneigte Hauptschneidplatte liegen oder von dieser Kegelmantelfläche zurück versetzt sein.

Der stufenförmige flächenförmige Absatz vor der jeweiligen Nebenschneidplatte ist vorzugsweise derart ausgebildet, dass sich eine in Richtung zur Bohrerspitze obere, etwa kegelmantelförmige Fläche im radial innenliegenden Bereich und eine Art kegelstumpfförmige Fläche im Bereich vor der Nebenschneidplatte bildet.

Die Höhe der Abstufung wird derart gewählt, dass sie etwa der Schneidfläche der Hauptschneidplatte bzw. des Nebenschneidelements entspricht. Hierdurch wird genügend zusätzlicher Spanraum für den Abtransport des Bohrmehls vor der entsprechenden Schneidplatte geschaffen.

Weitere Einzelheiten und Vorteile der Erfindung ergeben sich aus den nachstehend beschriebenen Ausführungsbeispielen, die anhand von Zeichnungen näher erläutert werden.

Es zeigen
- Fig. 1a: eine Seitenansicht auf ein erfindungsgemäßes Bohrwerkzeug im Bereich des Bohrerkopfes mit Förderwendelauslauf,
- Fig. 1b: eine seitliche Ansicht des Bohrwerkzeugs nach Fig. 1a,
- Fig. 2a: ein weiteres Ausführungsbeispiel für ein erfindungsgemäßes Bohrwerkzeug mit einer abgewandelten Nebenschneidplatte und
- Fig. 2b: eine seitliche Ansicht der Darstellung nach Fig. 2a;
- Fig. 3: ein Ausführungsbeispiel der Erfindung mit nur einer Hartmetall-Schneidplatte.

### Beschreibung der Ausführungsbeispiele:

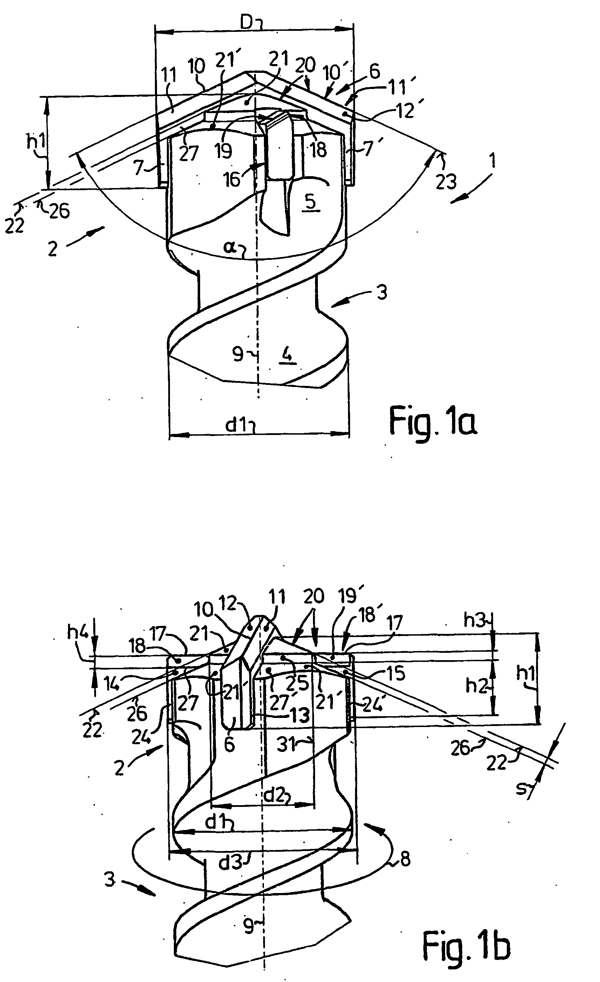

Gemäß dem ersten Ausführungsbeispiel der Erfindung nach Figur 1a , Figur 1b besteht der Gesteinsbohrer 1 aus einem Bohrkopf 2 und einer sich hieran anschließenden ein- oder mehrgängigen Förderwendel 3. Die Förderwendel 3 läuft mit ihrer Förderwendelnut 4 in den Bohrkopf 2 aus. Der Auslauf der Förderwendelnut 4 in den Bohrerkopf ist mit Bezugszeichen 5 bezeichnet.

Der Bohrkopf 2 umfasst eine Hartmetall-Schneidplatte 6 die als in Seitenansicht nach Figur la dachförmige Hauptschneidplatte ausgebildet ist und einen Winkel von α ≈ 130° einschließt. Die Hauptschneidplatte durchsetzt den gesamten Durchmesser d₁ des Bohrerkopfes und überragt diesen mit seitlichen Überständen 7, 7' zur Bildung des Bohrer-Nenndurchmesser D. Die Hauptschneidplatte 6 weist beidseitig einer Bohrerlängsachse 9 angeordnete stirnseitige Schneidkanten 10, 10' auf, mit in Drehrichtung (Pfeil 8) davor liegender Spanfläche 11, 11' und dahinterliegender Freifläche 12, 12'. Die Hauptschneidplatte 6 ist mittels eines axialen Längsschlitzes 13 mit einer Höhe h₁ in den Bohrkopf eingebettet und mittels einer Lötverbindung fest verankert.

Neben der Hauptschneidplatte 6 besitzt das erfindungsgemäße Bohrwerkzeug nach den Figuren 1a, 1b noch zwei Nebenschneidplatten 14, 15, die ebenfalls jeweils in einem axialen Längsschlitz 16 in den Bohrerkopf 2 mittels einer Lötverbindung eingebettet sind. Wie aus dem Ausführungsbeispiel nach Figur 1a, 1b ersichtlich, weisen die Nebenschneidplatten 14, 15 ebenfalls eine obere ebene Schneidkante 17 auf, die etwa senkrecht zur Bohrerlängsachse 9 ausgerichtet ist. In Drehrichtung (Pfeil 8) weist jede Nebenschneidplatte wiederum eine vordere Spanfläche 18, 18' und eine hintere Freifläche 19, 19' auf.

Durch die Anordnung von Haupt- (6) und Nebenschneidplatten 14, 15 ergibt sich ein Bohrkopf mit Kreuzschneidelementen, wobei das entstehende Kreuz einen Winkel von 90° oder auch einen stumpfen Winkel einnehmen kann.

Die Stirnfläche 20 des Bohrkopfes besteht wenigstens teilweise aus einer oberen kegelmantelförmigen Fläche 21, die auf einer Rotationskegelfläche 22 angeordnet ist. Dieser Rotationskegel 22 liegt etwa parallel zur Rotationskegelfläche 23 durch die Schneidkante 10, 10' der Hauptschneide 6.

Die radiale Erstreckung der sich gegenüberliegenden Nebenschneidplatten 14, 15 ergibt sich durch den Innendurchmesser d₂ und den Außendurchmesser d_{3.} Der Außendurchmesser d₃ ist um einen seitlichen Überstand 24, 24' größer als der Durchmesser d₁ des Bohrerkopfes 2.

Gemäß einem bevorzugten Ausführungsbeispiel wird nun die Stirnfläche 20 des Bohrerkopfes mit wenigstens einem sich axial erstreckenden, zylinderförmigen Absatz 25 versehen, der etwa eine Höhe h₃ aufweist, wobei die Höhe h₃ vorzugsweise gleich oder etwas kleiner ist als die seitliche Projektionshöhe h₄ der Spanfläche 18, 18' der Nebenschneidplatte 14, 15. Mit h₂ ist die Einbetttiefe der Nebenschneidplatte 14, 15 im Bohrerkopf bezeichnet.

Durch diesen etwa axial ausgerichteten Absatz 25 entsteht eine axial versetzt angeordnete kegelstumpfförmige Fläche 21', die auf der Rotationskegelfläche 26 liegt, die in einem Absatz "s" zur Rotationskegelfläche 22 angeordnet ist. Hierdurch stellt sich vor der Spanfläche 18, 18' ein vergrößerter Spanraum 27 für abzutragendes Bohrklein ein, was sich positiv auf den Bohrfortschritt auswirkt. Die Stirnfläche 20 des Bohrkopfes 2 ist demzufolge mittels des Absatzes 25 stufenförmig ausgebildet, mit einer oberen Kegelspitze 21, einem axialen Absatz 25 und einem nachfolgenden Kegelstumpf 21', wobei die Rotationskegelflächen 22, 26 parallel zueinander in einem Abstand "s" verlaufen. Durch eine derartige Anordnung wird ein zusätzlicher Spanraum 27 gebildet, der sich etwa aus der Stärke "s" und der Durchmesserdifferenz d₃ - d₂ ergibt. Die radial innenliegenden Kanten 31 der Nebenschneidelemente 14, 15 sind demzufolge in einem Abstand ½ * d₂ von der Bohrermittelachse 9 entfernt angeordnet. Der Absatz 25 erstreckt sich radial ab der Innenkante 31 der Nebenschneidelemente 14, 15.

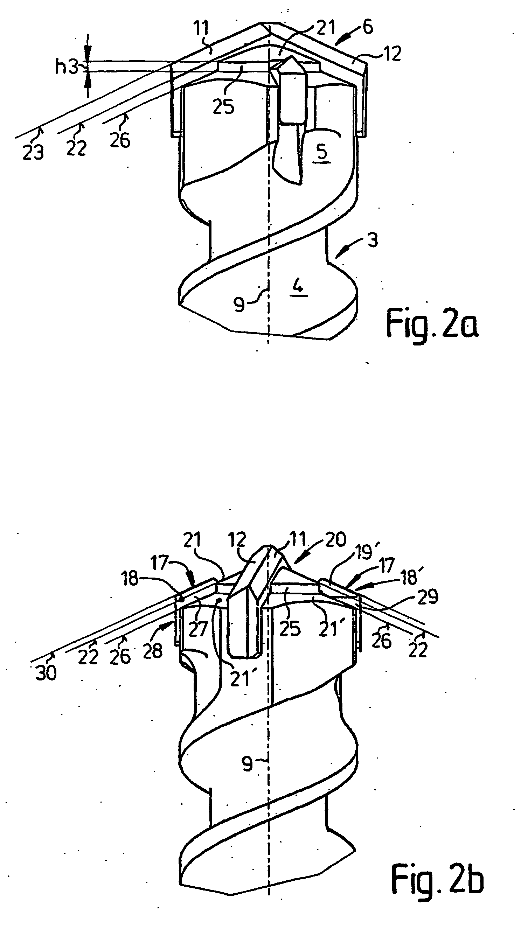

Beim Ausführungsbeispiel nach Figur 2a, 2b ist eine abgewandelte Ausführungsform der Nebenschneidplatten 28, 29 gewählt. In diesem Fall befinden sich die stirnseitigen Schneidkanten 17 ebenfalls auf einer Kegelmantelfläche 30, die etwas zurück versetzt liegt gegenüber der Rotationskegelfläche 23 der Hauptschneidplatte 6.

Der obere Teil 21 der Stirnfläche 20 des Bohrkopfes 2 liegt wiederum auf der Rotationskegelfläche 22, die etwas zurück versetzt gegenüber der Rotationskegelfläche 30 der stirnseitigen Schneidkanten 17 der Nebenschneidplatten 28, 29 liegt.

Analog zur Ausbildung des Ausführungsbeispiels nach Figur 1a, 1b ist auch im Ausführungsbeispiel nach Figur 2a, 2b eine axialer Absatz 25 vorgesehen, der zu einem abgesetzten, kegelstumpfförmigen Flächenabschnitt 21' auf der Rotationskegelfläche 26 führt. Hierdurch ist wiederum vor der jeweiligen Spanfläche 18, 18' der Nebenschneidplatten 28, 29 ein zusätzlicher Spanraum 27 gebildet, der einer verbesserten Abfuhr des Bohrmehls vor diesen Nebenschneidplatte 28, 29 dient.

Die stufenförmige Ausbildung der Stirnfläche 20 des Bohrerkopfes 2 bewirkt damit eine Erhöhung des Spanvolumens, das heißt es wird ein zusätzlicher Spanraum insbesondere vor den Nebenschneidplatten gebildet. Dabei erstreckt sich der zusätzliche Spanraum radial ab dem Absatz 25 kegelstumpfförmig nach Außen. Die Höhe h₃ des Absatzes 25 bestimmt dabei den zusätzlichen Spanraum 27.

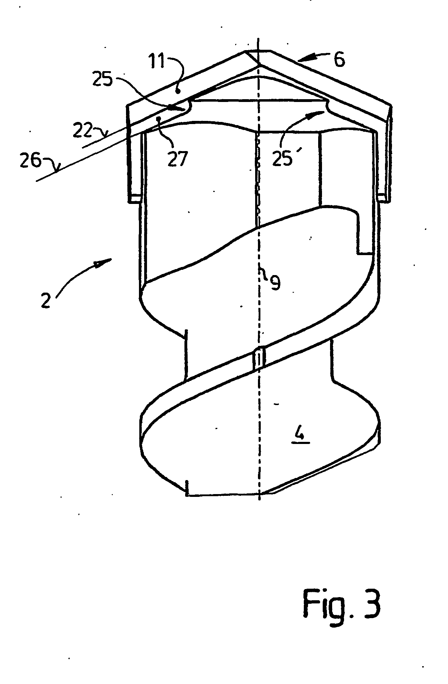

Die Fig. 3 zeigt den Gegenstand der vorliegenden Erfindung mit nur einer Hartmetall-Schneidplatte 6, wie sie auch in den Figuren 1 und 2 dargestellt ist. Im Übrigen sind gleiche Teile mit gleichen Bezugszeichen wie in Figur 1 und 2 versehen. Die in den Figuren 1 und 2 enthaltenden Nebenschneidplatten entfallen in Fig. 3, so dass der zusätzliche Spanraum 27 zur Abfuhr des Bohrmehls dient, welches von der Hartmetall-Schneidplatte 6 abgetragen wird. Hierfür weist der Bohrkopf 2 wiederum einen Absatz 25 bzw. Abstufung 25 auf, durch die die axial versetzt angeordneten Kegelmantelflächen 22, 26 gebildet sind. Dies entspricht der Ausbildung des Bohrkopfes in Fig. 1 bzw. 2.

Wie aus der Fig. 3 ersichtlich, kann der Absatz bzw. die Abstufung 25 durch eine axparallele Einschnittkante 25' gebildet sein, wobei der untere Übergang zur Kegelmantelfläche 26 abgerundet, oder wie in den Ausführungsbeispielen nach Fig. 1 und 2 eckig ausgeführt sein kann. Maßgeblich ist der sich durch die Abstufung ergebende zusätzliche Spanraum vor der Spanfläche 11 der Hartmetall-Schneidplatte 6.

Die Erfindung ist nicht auf das beschrieben und dargestellte Ausführungsbeispiel beschränkt. Sie umfasst auch vielmehr alle Abwandlungen im Rahmen der Schutzrechtsansprüche. Insbesondere kann die durch den Absatz 25 gebildete Spanraumvergrößerung auch eine andere Geometrie entsprechend der Kopfgeometrie des Bohrkopfes aufweisen.

### Bezugszeichenliste:

- 1: Gesteinsbohrer
- 2: Bohrkopf
- 3: Förderwendel
- 4: Förderwendelnut
- 5: Auslauf von 4 in 2
- 6: Hartmetall-Schneidplatte
- 7: Überstand
- 8: Drehrichtung
- 9: Bohrerlängsachse
- 10: Schneidkante
- 11: Spanfläche
- 12: Freifläche
- 13: Längsschlitz
- 14: Nebenschneidplatte
- 15: Nebenschneidplatte
- 16: Längsschlitz
- 17: Schneidkante
- 18: Spanfläche
- 19: Freifläche
- 20: Stirnfläche
- 21: Kegelmantelfläche
- 22: Rotationskegel
- 23: Rotationskegelfläche
- 24: Überstand
- 25: Absatz / Abstufung
- 26: Kegelmantelfläche
- 27: Spanraum
- 28: Nebenschneidplatte
- 29: Nebenschneidplatte
- 30: Rotationskegelfläche
- 31: Innenkante der Nebenschneidplatte

## Patentansprüche

1. Gesteinsbohrer mit Wendelschaft (3) und einem Bohrkopf (2), der auf seiner in Vorschubrichtung weisenden Stirnseite (20) wenigstens ein sich über den Bohrerkopf quer erstreckendes, dachförmiges Hartmetall-Schneidelement (6) mit seitlichen Schneidkanten (10, 10') aufweist, wobei zumindest vor einer der Schneidkanten (10, 10') des Hartmetall-Schneidelements (6) ein zusätzlicher Spanraum gebildet ist, **dadurch gekennzeichnet, dass** die Stirnfläche (20) des Bohrkopfes (2) unmittelbar vor jeder Schneidkante (10, 10') eine umlaufende Abstufung (25) aufweist.

2. Bohrer nach Anspruch 1, **dadurch gekennzeichnet, dass** der Bohrkopf (2) eine zumindest über dessen Durchmesser (d₁) sich erstreckende Hartmetall-Schneidplatte (6) und wenigstens ein zur Schneidplatte (6) quer angeordnetes, zur Bohrermittelachse (9) beabstandetes Nebenschneidelement (14, 15 bzw. 28, 29) aufweist, wobei vorzugsweise vor der Hauptschneidplatte (6) und/oder dem Nebenschneidelement (14, 15 bzw. 28, 29) eine Abstufung (25) zur Bildung eines zusätzlichen Spanraums (27, 27') vorgesehen ist.

3. Bohrer nach Anspruch 1 oder 2, **dadurch gekennzeichnet, dass** der Bohrkopf (2) zur Aufnahme einer dachförmig geneigten Hauptschneidplatte (6) und wenigstens einer Nebenschneidplatte (14, 15 bzw. 28, 29) an seiner Stirnseite (20) wenigstens teilweise kegelförmig derart ausgebildet ist, dass die Kegelmantelfläche (21, 21') wenigstens im Bereich der sich radial erstreckenden Nebenschneidplatte (14, 15; 28, 29) einen axial sich erstreckenden abgestuften Spanraum (27, 27') aufweist.

4. Bohrer nach einem der Ansprüche 1 bis 3, **dadurch gekennzeichnet, dass** die abgestuften Kegelmantelflächen (21, 21') der Stirnfläche (20) des Bohrkopfes (2) einen etwa gleichen Kegelwinkel aufweisen, wobei der Kegelwinkel vorzugsweise dem Winkel α der Hauptschneidplatte (6) entspricht.

5. Bohrwerkzeug nach einem der vorhergehenden Ansprüche, **dadurch gekennzeichnet, dass** die Nebenschneidplatte (14, 15 bzw. 28, 29) sich etwa über den halben Radius (1/4 * d₁) des Bohrkopfes (2) im radial nach Außen gerichteten Bereich erstreckt (d₂ ≈ ½ d₁).

6. Bohrer nach einem der vorhergehenden Ansprüche, **dadurch gekennzeichnet, dass** die Nebenschneidplatte (14, 15) eine stirnseitige Schneidkante (17) aufweist, die etwa in einem rechten Winkel zur Bohrerlängsachse (9) angeordnet ist.

7. Bohrer nach einem der vorhergehenden Ansprüche 1 bis 5, **dadurch gekennzeichnet, dass** die Nebenschneidplatte (28, 29) eine stirnseitige Schneidkante (17) aufweist, die auf einer Kegelmantelfläche (30) liegt, wobei die Kegelmantelfläche (30) auf der gleichen Kegelmantelfläche (23) oder auf einer hierzu axial zurück versetzten Kegelmantelfläche (30) liegt und wobei vorzugsweise der von der Kegelmantelfläche (30) eingeschlossen Winkel gleich ist wie der Winkel α der Kegelmantelfläche (23) der Hauptschneidplatte (6).

8. Bohrer nach einem der vorhergehenden Ansprüche, **dadurch gekennzeichnet, dass** die senkrecht zur Bohrerlängsachse ausgerichtete Schneidkante (17) der Nebenschneidplatte (14, 15) in einer axialen Höhe angeordnet ist, die der Oberkante des Absatzes (25) entspricht.

9. Bohrer nach einem der vorhergehenden Ansprüche, **dadurch gekennzeichnet, dass** die Höhe h₃ des Absatzes (25) etwa gleichgroß ist wie die Projektionshöhe der Spanfläche (18, 18') der Nebenschneidplatte (14, 15).

## Claims

1. Rock drill having a helical shank (3) and a drill head (2) which has at least one roof-shaped carbide cutting element (6) on its end face (20) pointing in the feed direction, this carbide cutting element (6) extending across the drill head and having lateral cutting edges (10, 10'), an additional chip space being formed at least in front of one of the cutting edges (10, 10') of the carbide cutting element (6), **characterized in that** the end face (20) of the drill head (2) has an encircling step (25) directly in front of each cutting edge (10, 10').

2. Drill according to Claim 1, **characterized in that** the drill head (2) has a carbide cutting tip (6), extending at least over its diameter (d₁), and at least one secondary cutting element (14, 15 or 28, 29) which is arranged transversely to the cutting tip (6) and is at a distance from the drill centre axis (9), a step (25) for forming an additional chip space (27, 27') being provided preferably in front of the main cutting tip (6) and/or the secondary cutting element (14, 15 or 28, 29).

3. Drill according to Claim 1 or 2, **characterized in that** the drill head (2), for accommodating a main cutting tip (6) inclined in a roof shape and at least one secondary cutting tip (14, 15 or 28, 29) on its end face (20), is designed at least partly conically in such a way that the lateral surface (21, 21') of a cone, at least in the region of the radially extending secondary cutting tip (14, 15; 28, 29), has an axially extending stepped chip space (27, 27').

4. Drill according to one of Claims 1 to 3, **characterized in that** the stepped lateral surfaces (21, 21') of the cones of the end face (20) of the drill head (2) have an approximately equal cone angle, the cone angle preferably corresponding to the angle α of the main cutting tip (6).

5. Drill according to one of the preceding claims, **characterized in that** the secondary cutting tip (14, 15 or 28, 29) extends approximately over half the radius (¼ x d₁) of the drill head (2) in the region directed radially outwards (d₂ ≈ 1/2 d₁).

6. Drill according to one of the preceding claims, **characterized in that** the secondary cutting tip (14, 15) has a front-end cutting edge (17) which is arranged approximately at a right angle to the drill longitudinal axis (9).

7. Drill according to one of the preceding Claims 1 to 5, **characterized in that** the secondary cutting tip (28, 29) has a front-end cutting edge (17) which lies on a lateral surface (30) of a cone, the lateral surface (30) of the cone lying on the same lateral surface (23) of a cone as a main cutting tip (6) inclined in a roof shape or on a lateral surface (30) of a cone set back axially therefrom, and the angle enclosed by the lateral surface (30) of the cone preferably being the same as the angle α of the lateral surface (23) of the cone of the main cutting tip (6).

8. Drill according to one of the preceding claims, **characterized in that** the cutting edge (17), oriented perpendicularly to the drill longitudinal axis, of the secondary cutting tip (14, 15) is arranged at an axial height which corresponds to the top edge of the shoulder (25).

9. Drill according to one of the preceding claims, **characterized in that** the height h₃ of the shoulder (25) is approximately the same size as the projection height of the chip face (18, 18') of the secondary cutting tip (14, 15).

## Revendications

1. Foret à pierre comprenant une tige à spirale (3) et une tête de forage (2) présentant sur son côté frontal (20) tourné dans la direction d'avance au moins un élément de coupe en métal dur (6) en forme de toit, qui s'étend transversalement sur la tête de forage et comporte des arêtes de coupe latérales (10, 10'), avec au moins un espace entre dents supplémentaire formé devant l'une des arêtes de coupe (10, 10') de l'élément de coupe en métal dur (6),
**caractérisé en ce que**
la face frontale (20) de la tête de forage (2) présente immédiatement devant chaque arête de coupe (10, 10') un épaulement périphérique (25).

2. Foret selon la revendication 1,
**caractérisé en ce que**
la tête de forage (2) présente une plaque de coupe en métal dur (6) s'étendant au moins sur son diamètre (d₁), et au moins un élément de coupe auxiliaire (14, 15 ou 28, 29) disposé transversalement par rapport à la plaque de coupe (6) et à distance de l'axe médian du foret (9), avec un épaulement (25) prévu pour la formation d'un espace entre dents supplémentaire (27, 27'), de préférence devant la plaque de coupe principale (6) et/ou l'élément de coupe auxiliaire (14, 15 ou 28, 29).

3. Foret selon la revendication 1 ou 2,
**caractérisé en ce que**
pour accueillir une plaque de coupe principale (6) inclinée en forme de toit et au moins une plaque de coupe auxiliaire (14, 15 ou 28, 29), la tête de forage (2) est configurée au niveau de son côté frontal (20) au moins partiellement en forme de cône, de telle sorte que la surface d'enveloppe conique (21, 21') présente, au moins dans la zone de la plaque de coupe auxiliaire à extension radiale (14, 15 ; 28, 29), un espace entre-dents étagé à extension axiale (27, 27').

4. Foret selon l'une des revendications 1 à 3,
**caractérisé en ce que**
les surfaces d'enveloppe coniques étagées (21, 21') de la surface frontale (20) de la tête de forage (2) présentent un angle au sommet approximativement identique, l'angle au sommet correspondant de préférence à l'angle α de la plaque de coupe principale (6).

5. Outil de forage selon l'une des revendications précédentes,
**caractérisé en ce que**
la plaque de coupe auxiliaire (14, 15 ou 28, 29) s'étend approximativement sur le demi-rayon (1/4 * d₁) de la tête de forage (2) dans la zone orientée radialement vers l'extérieur (d₂ ≈ ½ d₁).

6. Foret selon l'une des revendications précédentes,
**caractérisé en ce que**
la plaque de coupe auxiliaire (14, 15) présente une arête de coupe du côté frontal (17) disposée approximativement perpendiculairement à l'axe longitudinal du foret (9).

7. Foret selon l'une des revendications précédentes 1 à 5,
**caractérisé en ce que**
la plaque de coupe auxiliaire (28, 29) présente une arête de coupe du côté frontal (17) qui repose contre une surface d'enveloppe conique (30), la surface d'enveloppe conique (30) reposant sur la même surface d'enveloppe conique (23) ou sur une surface d'enveloppe conique (30) décalée axialement vers l'arrière, et l'angle formé par la surface d'enveloppe conique (30) est de préférence identique à l'angle α de la surface d'enveloppe conique (23) de la plaque de coupe principale (6).

8. Foret selon l'une des revendications précédentes,
**caractérisé en ce que**
l'arête de coupe (17) de la plaque de coupe auxiliaire (14, 15) orientée perpendiculairement à l'axe longitudinal du foret est disposée à une hauteur axiale correspondant à l'arête supérieure de l'épaulement (25).

9. Foret selon l'une des revendications précédentes,
**caractérisé en ce que**
la hauteur h₃ de l'épaulement (25) est approximativement égale à la hauteur de projection de la surface d'attaque (18, 18') de la plaque de coupe auxiliaire (14, 15).
